# EUROPÄISCHE PATENTANMELDUNG

(11) **EP 1 040 904 A2**
(43) Veröffentlichungstag der Anmeldung: **04.10.2000**
(21) Anmeldenummer: 00106208.2
(22) Anmeldetag: 22.03.2000
(51) Int. Cl.: B29C 49/42, B29C 49/04

(54) **Verfahren und Vorrichtung zur Herstellung von Hohlkörpern aus Kunststoff**

(30) Priorität: 01.04.1999 DE 19914912
(71) Anmelder: Ferger, Eberhard, 53842 Troisdorf (DE)
(72) Erfinder: Ferger, Eberhard, 53842 Troisdorf (DE)
(74) Vertreter: Fechner, Joachim, Dr.-Ing.

(57) **Zusammenfassung**

Verfahren zum Herstellen zwei- oder dreidimensional gewundener Hohlkörper aus Kunststoff in dem Hohlraum (2) einer mit einer Öffnung versehenen Form, bei dem man einen plastifizierten Kunststoffschlauch (6) durch die Formöffnung (3) in den Hohlraum einführt und dabei Luft durch den Raum zwischen der Hohlraumwandung und dem Schlauch (6) leitet, nach erfolgtem Laden der Form die Öffnung (3) schließt und den Schlauch (6) bis zur Anlage an der Hohlraumwandung verformt, dadurch gekennzeichnet, daß man die Luft bei der Schlaucheinführung durch die Wandung ungerichtet in den Hohlraum leitet und zur Schlauchverformung durch die Wandung absaugt.

## Beschreibung

Die Erfindung betrifft ein Verfahren zum Herstellen zwei- oder dreidimensional gewundener Hohlkörper aus Kunststoff in dem Formhohlraum einer mit einer Öffnung versehenden Form, bei dem man einen plastifizierten Kunststoffschlauch durch die Formöffnung in den Hohlraum einführt und dabei Luft durch den Raum zwischen der Hohlraumwandung und dem Schlauch leitet, nach dem erfolgten Laden der Form die Öffnung schließt und den Schlauch bis zur Anlage an der Hohlraumwandung verformt. Die Erfindung betrifft auch eine Vorrichtung zur Herstellung länglicher, dreidimensional gewundener Hohlkörper aus Kunststoff mit einer mehrteiligen Form, die einen Hohlraum mit einer schließbaren Einführungsöffnung enthält, und mit einer Düse zur Bildung und Einführung eines plastifizierten Kunststoffschlauches durch die Einführungsöffnung in den Hohlraum.

Aus EP 0 301 694 ist ein Verfahren zum Blasformen länglicher hohler Kunststoffgegenstände bekannt, bei dem ein schlauchartiger Vorformling in ein Ende eines Formhohlraums eingeführt wird, zur Führung des Vorformlings bei seinem Einbringen in den Formhohlraum Luft radial in den Hohlraum eingeblasen wird und nach dem vollständigen Schließen der Form Druckluft in das Innere des Vorformlings eingeblasen wird, um den Formling an der Hohlraumwandung zur Anlage zu bringen. Der Blasformapparat ist im wesentlichen dadurch gekennzeichnet, daß in der Hohlraumwandung Einsätze mit radial zum Formhohlraum verlaufenden Bohrungen vorgesehen sind, durch die zwecks Führung des Vorformlings bei dessen Einführung in den Formhohlraum Druckluft radial auf diesen gerichtet wird. Dieser Apparat ist durch die Formeinsätze mit den Bohrungen relativ aufwendig herzustellen. Die störungsfreie Führung des Schlauches in dem einsatzfreien Hohlraumbereich ist nicht immer möglich.

Der vorliegenden Erfindung liegt die Aufgabe zugrunde, ein Verfahren und eine Vorrichtung zur Herstellung vorzugsweise länglicher, gewundener Hohlkörper aus Kunststoff ohne die oben genannten Nachteile zu schaffen. Insbesondere soll die Form weniger aufwendig und preisgünstiger herzustellen sein. Die Führung des plastifizierten Schlauches in der Form soll auch bei stark gewundenen Hohlkörpern sicher möglich sein, so daß der Schlauch schneller in die Form eingeführt werden kann. Schließlich soll auch bei Hohlräumen mit starken und scharfen Windungen eine formschlüssige Anlage an der Hohlraumwandung und damit eine genaue Formgebung des Hohlkörpers erreicht werden. Weitere Vorteile ergeben sich aus der folgenden Beschreibung.

Diese Aufgabe wird bei dem eingangs genannten Verfahren erfindungsgemäß dadurch gelöst, daß man die Luft bei der Schlaucheinführung durch die Wandung ungerichtet in den Hohlraum leitet und zur Schlauchverformung durch die Wandung abzieht. Die Luft wird anders als bei der bekannten Blasformvorrichtung nicht durch definierte radiale Düsenbohrungen in bestimmten Wandungsbereichen des Hohlraums eingeblasen, sondern ungerichtet mehr oder weniger auf der gesamten Innenfläche des Hohlraums, so daß sich bei der Einführung eine Lufthülle um den Schlauch bildet. Dadurch kann der plastifizierte Schlauch ohne Kontakt mit der Hohlraumwand in den Hohlraum gleiten, wobei die eingeleitete Luft im Gegenstrom zur Schlauchbewegung durch die Hohlraumöffnung entweichen kann. Nachdem der Schlauch genügend weit in den Formhohlraum eingeführt ist, wird die Öffnung geschlossen und durch die Hohlraumwandung Luft aus dem Ringraum zwischen dem Schlauchformling und der Hohlraumwandung abgesaugt. Dadurch weitet sich der Formling auf und legt sich an die Hohlraumwandung an, wodurch die dreidimensional gewundene Hohlkörperform entsteht.

Nach einer Ausführungsform des erfindungsgemäßen Verfahrens leitet man die Luft auf der gesamten Fläche der Wandung in den Formhohlraum ein. Dies ermöglicht es, die gesamte Wandung des Formhohlraums gleich auszubilden und auf stellenweise Einsätze in den Bereichen zu verzichten, in denen sich Luftpolster bilden sollen.

Bei einer besonderen Ausführungsform des erfindungsgemäßen Verfahrens leitet man die Luft in verschiedenen Bereichen der Wandung mit unterschiedlichen Geschwindigkeiten ein. Dies wird ermöglicht durch Anwendung unterschiedlicher Luftdrucke. Auf diese Weise können in verschiedenen Bereichen der Hohlraumwandung Luftpolster unterschiedlicher Tragfähigkeit für den einzuführenden Schlauch geschaffen werden. Es versteht sich, daß die Bereiche der Hohlraumwandung einen erhöhten Luftdurchsatz pro Flächeneinheit haben, in denen die Wandung stark von der Senkrechten abweicht oder der Schlauch bei der Einführung seine Richtung ändert, so daß er zum Wandkontakt neigt.

Die zur Umhüllung des in den Formhohlraum gleitenden Schlauches dienende Luft kann mit erhöhter Temperatur in den Hohlraum eingeleitet werden, um ein Abkühlen des plastifizierten Schlauches zu verhindern.

Die Aufgabe wird ferner bei der eingangs genannten Vorrichtung erfindungsgemäß dadurch gelöst, daß die Formteile wenigstens in dem an den Formhohlraum angrenzenden Bereich aus porösem Sintermetall bestehen und einen oder mehrere Leitungsanschlüsse für die Beaufschlagung des Sintermetalls mit Druckluft oder Vakuum aufweisen. Anders als bei der oben genannten bekannten Vorrichtung ist die Kontur des herzustellenden Hohlkörpers in Formteile aus Sintermetall eingearbeitet. Dies hat den Vorteil, daß keine besondere Einsätze mit radial gerichteten Düsen und hinteren Verteilungskanälen erforderlich sind. Der Formhohlraum kann vielmehr wie bei einer Form aus kompaktem Werkstoff eingearbeitet werden, wobei eine allseitige Beaufschlagung des Schlauches mit der Führungsluft gewährleistet wird. Die Mehrzahl der Leitungsanschlüsse kann über die Länge des Formhohlraums verteilt sein und entsprechend der erforderlichen Tragfähigkeit der Luftpolster mit Luft unterschiedlicher Drücke versorgt werden. Die Leitungsanschlüsse können von der Druckluft auf Vakuum umgeschaltet werden. Der Schlauch wird dann unter Aufweitung an die Oberfläche des Hohlraums angesaugt, so daß er die gewünschte geometrische Form erhält. Der in dem Schlauch herrschende Luftdruck unterstützt diesen Vorgang. Eine Lufteinführung in den Schlauch, d.h. ein Aufblasen ist nicht erforderlich, kann aber den Verformungsvorgang begünstigen.

Zweckmäßigerweise weist jedes Formteil zwei oder mehr Sintermetallbereiche mit separaten Anschlüssen auf. Hierdurch können bestimmte Bereiche der Hohlraumwandung mit mehr oder weniger Luft beaufschlagt und so die Tragfähigkeit der Luftpolster unterschiedlich eingestellt werden. Dabei können die Sintermetallbereiche durch innere Wandungen pneumatisch getrennt sein, so daß sich unterschiedliche Luftdrucke nicht innerhalb des Sintermetallkörpers ausgleichen können.

Vorzugsweise sind in den Sintermetallbereichen Kanäle für den Kühlmittelkreislauf enthalten. Da der Wärmedurchgang des Sintermetalls gegenüber einem kompakten Metall verringert ist, ist es zweckmäßig, mit tiefen Kühlmitteltemperaturen und geringen Abständen zwischen den Kühlmittelkanälen und der Hohlraumwandung zu arbeiten.

Geeignete Sintermetalle können aus Bronze oder Edelstahl bestehen.

Eine Ausführungsform der Erfindung wird nachfolgend an Hand der Zeichnung näher beschrieben. Es zeigen
Figur 1 die Stirnansicht einer Formhälfte mit dem Formhohlraum und der Düse mit teilweise extrudiertem Schlauch; und
Figur 2 die Draufsicht der in Figur 1 gezeigten Formhälfte.

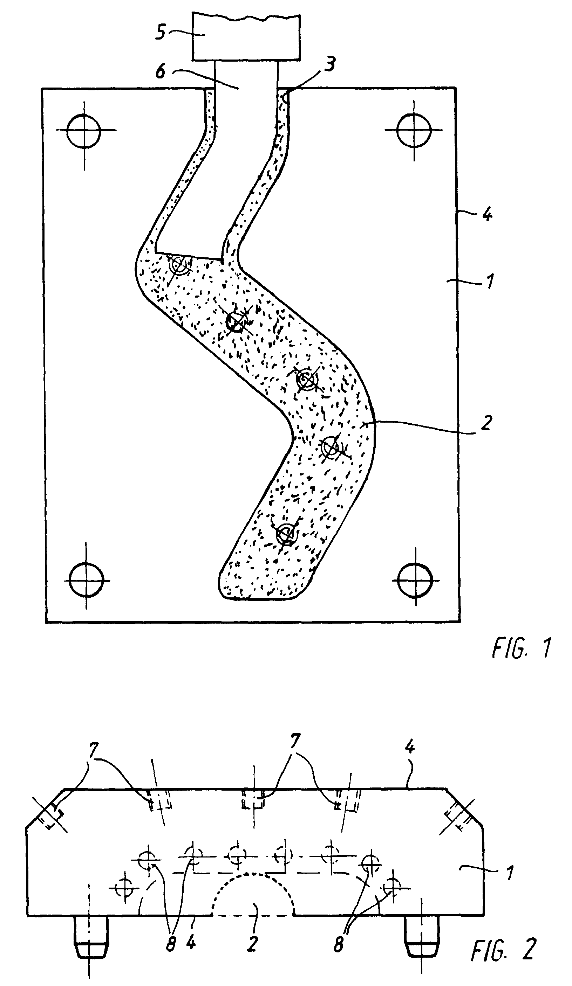

Die in Figur 1 gezeigte Formhälfte 1 hat einen räumlich S-förmigen Formhohlraum 2 mit einer oberseitigen Einführungsöffnung 2. Die gesamte Formhälfte 1 besteht aus porösem Sintermetall und ist mit Ausnahme der Formhohlraumoberfläche allseitig mit einer Stahlhülle 4 bekleidet. Eine Düse 5 hat ein Schlauchstück 6 extrudiert, das bereits ein Stück weit in den Formhohlraum 2 eingeführt ist.

Aus Figur 2 ist ersichtlich, daß die Formhälfte 1 auf der Rückseite mehrere Anschlüsse 7 hat, an die Leitungen angeschlossen werden können, die Druckluft führen und auf Vakuum umgeschaltet werden können. Ferner sind in Figur 2 mehrere Kühlmittelkanäle 8 angedeutet, die nach der Anlage des Schlauches 6 an der Wandung des Hohlraums für die Kühlung des Hohlkörpers sorgen.

Das Sintermetall kann aus unterschiedlichen Materialien, wie z.B. Edelstahl oder Bronze bestehen. Auch die Porosität kann unterschiedlich sein. Es ist auch möglich, an der Oberfläche des Formhohlraums ein Sintermetall mit geringerer Porosität und im Inneren des Formteils ein Sintermetall mit größeren Poren und damit besserer spezifischer Durchströmbarkeit einzusetzen, während die Oberfläche der Formhohlraumwandung relativ glatt ist.

Die Erfindung betrifft die Herstellung vorzugsweise länglicher, räumlich gewundener Hohlkörper, ist jedoch auch für die Herstellung von in der Ebene gewundenen Hohlkörpern geeignet.

## Patentansprüche

1. Verfahren zum Herstellen zwei- oder dreidimensional gewundener Hohlkörper aus Kunststoff in dem Hohlraum einer mit einer Öffnung versehenen Form, bei dem man einen plastifizierten Kunststoffschlauch durch die Formöffnung in den Hohlraum einführt und dabei Luft durch den Raum zwischen der Hohlraumwandung und dem Schlauch leitet, nach erfolgtem Laden der Form die Öffnung schließt und den Schlauch bis zur Anlage an der Hohlraumwandung verformt, dadurch gekennzeichnet, daß man die Luft bei der Schlaucheinführung durch die Wandung ungerichtet in den Hohlraum leitet und zur Schlauchverformung durch die Wandung absaugt.

2. Verfahren nach Anspruch 1, dadurch gekennzeichnet, daß man die Luft auf der gesamten Fläche der Wandung in den Hohlraum einleitet.

3. Verfahren nach Anspruch 1 oder 2, dadurch gekennzeichnet, daß man die Luft in verschiedenen Bereichen der Wandung mit unterschiedlichen Geschwindigkeiten einleitet.

4. Verfahren nach einem der Ansprüche 1 bis 3, dadurch gekennzeichnet, daß der Schlauch bei der Einführung unter einem dem Außendruck entsprechenden inneren Luftdruck gehalten wird.

5. Verfahren nach einem der Ansprüche 1 bis 4, dadurch gekennzeichnet, daß man die Luft mit erhöhter Temperatur in den Hohlraum einleitet.

6. Vorrichtung zur Herstellung zwei- oder dreidimensional gewundener Hohlkörper aus Kunststoff mit einer mehrteiligen Form, die einen Hohlraum (2) mit einer schließbaren Einführungsöffnung (3) enthält, und mit einer Düse (5) zur Bildung und Einführung eines plastifizierten Kunststoffschlauches (6) durch die Einführungsöffnung in den Hohlraum (2), dadurch gekennzeichnet, daß die Formteile (1) wenigstens in dem an den Hohlraum (2) angrenzenden Bereich aus porösem Sintermetall bestehen und einen oder mehrere Leitungsanschlüsse (7) für die Beaufschlagung des Sintermetalls mit Druckluft oder Vakuum aufweisen.

7. Vorrichtung nach Anspruch 6, dadurch gekennzeichnet, daß jedes Formteil (1) zwei oder mehr Sintermetallbereiche mit separaten Anschlüssen (7) aufweist.

8. Vorrichtung nach Anspruch 6 oder 7, dadurch gekennzeichnet, daß in den Sintermetallbereichen Kanäle (8) für ein Kühlmittel enthalten sind.

9. Vorrichtung nach einem der Ansprüche 6 bis 8, dadurch gekennzeichnet, daß das Sintermetall aus Bronze oder Stahl besteht.
